# EUROPÄISCHE PATENTANMELDUNG

(11) **EP 1 304 497 A2**
(43) Veröffentlichungstag der Anmeldung: **23.04.2003**
(21) Anmeldenummer: 02022858.1
(22) Anmeldetag: 14.10.2002
(51) Int. Cl.: F16F 9/04

(54) **Gasdruckfeder**

(30) Priorität: 18.10.2001 DE 10151497
(71) Anmelder: Oest, Burkhard, 59846 Sundern-Wildewiese (DE)
(72) Erfinder: Oest, Burkhard, 59846 Sundern-Wildewiese (DE)
(74) Vertreter: Fritz, Edmund Lothar, Dipl.-Chem.

(57) **Zusammenfassung**

Gasdruckfeder mit wenigstens einem entgegen der Federkraft eines in einem Druckraum enthaltenen Druckgases in einem Gehäuse axial in einer Führung beweglichen Kolben, auf dessen dem Druckraum abgewandtes Ende ein einen Hub ausführendes Bauteil einwirkt, wobei der Druckraum (104a) mindestens teilweise von einer elastisch verformbaren Druckmembran (104) umschlossen ist und die Druckmembran direkt oder indirekt von wenigstens einem axial beweglichen Druckbolzen (102) als Kolben beaufschlagt wird.

## Beschreibung

Die vorliegende Erfindung betrifft eine Gasdruckfeder mit wenigstens einem entgegen der Federkraft eines in einem Druckraum enthaltenen Druckgases in einem Gehäuse axial in einer Führung beweglichen Kolbenelement, auf dessen dem Druckraum abgewandtes Ende ein einen Hub ausführendes Bauteil einwirkt, wobei der Druckraum mindestens teilweise von einer elastisch verformbaren Druckmembran umschlossen ist und diese direkt oder indirekt von wenigstens einem axial beweglichen Druckbolzen als Kolbenelement beaufschlagt wird.

Aus der DE 2 82 869 C ist eine Gasdruckfeder der eingangs genannten Gattung bekannt geworden, bei der ein axial verschiebbarer Kolben mit einem elastischen Balg verbunden ist, der eine Gummischicht aufweist sowie aus weiteren Lagen aus Gewebe besteht. Da dieser Balg nur teilweise abgestützt ist, nämlich in seinem mittigen Befestigungsbereich und am äußeren Umfang nicht aber in dazwischenliegenden ringförmigen Abschnitten, und da der Balg in diesen Abschnitten außerdem stark umgelenkt ist und bei der Äxialbewegung des Kolbens teilweise auf Zug beansprucht wird, reisst der Balg bei Belastung mit höheren Drücken von beispielsweise mehr als 20 bar. Außerdem ist bei dieser bekannten Vorrichtung mittig eine Kolbenstange vorgesehen, so dass ein mittiger Durchgang durch die Gasdruckfeder für ein weiteres Bauteil wie eine Welle oder dergleichen nicht gegeben ist.

Die WO 89 12 764 A1 beschreibt einen pneumatischen Stoßdämpfer mit einer ringförmigen Membran, die einen mittigen Durchgang aufweist. Die Membran hat eine Ringwulstform und befindet sich in einem Gehäuseraum, in dem sie nur im Bereich von Teilflächen, insbesondere im zentrischen Bereich abgestützt ist. Eine solche Vorrichtung kann nur im Druckluftbereich arbeiten, das heißt mit Pressluft zwischen etwa 5 und max. etwa 10 bar. Darüber hinaus entsteht wegen der fehlenden Abstützung eine zu starke Belastung der Membran.

Die DE 43 18 198 C1 beschreibt eine Membranlehne, die sich dazu eignen soll, beispielsweise in Maschinen Stahlfedern zu ersetzen. Diese Vorrichtung soll auch für hohe Drucke geeignet sein. Dabei ist für die Membran eine Abstützung in Form mehrer konzentrischer Ringe vorgesehen. Eine Kolbenstange presst über eine Mutter auf die Membran. Die konzentrischen Ringe übernehmen die Hubdruckkraft aufgrund ihrer Form, wobei sie im Hubgriff mit einem Zentralsegment verbleiben. Ein treppenförmiger Kolben drückt die Ringe wieder zurück. Diese Vorrichtung ist sehr komplex aufgebaut und daher aufwendig in der Herstellung. Konstruktionsbedingt ist eine große axiale Länge in Hubrichtung gegeben. Der Aufbau dieser Gasdruckfeder ist nachteilig, wenn man eine kompakte Bauform anstrebt.

Aus der EP 0 708 267 A2 ist eine Gasdruckfeder der eingangs genannten Gattung bekannt geworden, bei der den Kolben ein zylindrischer Druckraum zugeordnet ist, wobei die Kolben selbst außerdem hohl sind und einen mittigen axialen zylindrischen Hohlraum aufweisen. Das Druckgas nimmt somit den Raum innerhalb des Kolbens und den zylindrischen Arbeitsraum ein, innerhalb dessen sich der Kolben bewegt. Der Kolben ist über Dichtungen gegen den zylindrischen Arbeitsraum abgedichtet. Außerdem sind untere Widerlager für den Kolben über Dichtungsringe gegen das Gehäuse abgedichtet. Dennoch wurde festgestellt, dass, wenn eine solche Gasdruckfeder eine Vielzahl von Hüben ausführt, es vorkommen kann, dass keine ausreichende Dichtigkeit mehr gegeben ist, so dass der Druck des Druckgases im Druckraum abfällt und die Federkraft nachlässt.

Ausgehend von dem zuvor genannten Stand der Technik liegt die Aufgabe der vorliegenden Erfindung darin, eine Gasdruckfeder der eingangs genannten Gattung zu schaffen, die ein Arbeiten mit hohen Drücken zulässt, mechanisch einfach aufgebaut ist und eine kompakte Bauform zulässt. Weiterhin ist es Anliegen der Erfindung, dass eine solche Gasdruckfeder auch nach einer großen Vielzahl von Hüben eine unveränderte Dichtigkeit gewährleistet und dass keine Verluste von Gas aus dem Druckraum auftreten.

Die Lösung dieser Aufgabe liefert eine erfindungsgemäße Gasdruckfeder der eingangs genannten Gattung mit den kennzeichnenden Merkmalen des Hauptanspruchs. Erfindungsgemäß ist vorgesehen, dass der Druckraum mindestens teilweise von einer elastisch verformbaren Druckmembran umschlossen ist. Diese Druckmembran wird direkt oder indirekt von wenigstens einem axial beweglichen Druckbolzen beaufschlagt. Dieser wenigstens eine axial bewegliche Druckbolzen federt ein und überträgt die Kräfte auf die Druckmembran. Ein Kolben im eigentlichen Sinne wie bei der eingangs geschilderten aus dem Stand der Technik bekannten Gasdruckfeder, der sich innerhalb eines Zylinderraums bewegt, ist nicht mehr vorhanden. Der nun erfindungsgemäß als Kolbenelement verwendete Druckbolzen bewegt sich nicht mehr innerhalb eines Raums, welches das Druckgas enthält, sondern außerhalb des Gasraums. Der Gasraum, der das Druckgas enthält, wird von der Druckmembran umschlossen. Durch diese Bauart kann man eine wesentlich höhere Dichtigkeit erzielen. Bei einem Hub werden die Kräfte aus der Axialbewegung des Druckbolzens auf die Druckmembran übertragen und führen zu einer elastischen Verformung der Druckmembran, die überwiegend in dem Bereich stattfindet, der dem beweglichen Druckbolzen zugewandt ist. Durch diese elastische Verformung der Druckmembran wird das Gas im Druckraum komprimiert und dadurch die entsprechende Rückstellkraft erzeugt. Allerdings ist die Bewegung , die die Druckmembran ausführt, in dem sie umgebenden Gehäuse relativ gering. Es kommt unter anderem zu einer Stauchung der Druckmembran an der dem Druckbolzen zugewandten Seite. Auch bei Verformung der Druckmembran bleibt aber das Gas im Druckraum von der Druckmembran umschlossen. Dadurch entfällt das Problem der Abdichtung zwischen einem Zylinderraum und einem in diesem Zylinderraum axial beweglichen Kolben. Bei der erfindungsgemäßen Bauweise der Gasdruckfeder könnte ein Gasverlust praktisch nur dann auftreten, wenn in der Druckmembran Risse entstehen, z. B. durch Materialermüdung. Dies ist aber bei geeigneter Materialauswahl und entsprechender Dimensionierung der Druckmembran während der gewöhnlichen Lebensdauer einer solchen Gasdruckfeder ausgeschlossen.

Weiterhin sieht die Erfindung vor, dass mehrere Druckbolzen vorgesehen sind, deren Mittelpunkte auf einem Kreisring angeordnet sind. Dadurch kann die Gasdruckfeder einen zentrischen zylindrischen Durchgang aufweisen, der geeignet ist, beispielsweise eine Welle oder dergleichen aufzunehmen, die die Gasdruckfeder durchsetzt. In diesem Fall kann man die Gasdruckfeder für Anwendungen einsetzen, bei denen nach dem Stand der Technik gewöhnlich Pakete von Tellerfedern verwendet werden.

Eine mögliche Variante der Erfindung sieht die Verwendung eines oder mehrerer Druckbolzen mit ringsegmentförmigen Druckabschnitten vor, welche durch entsprechend geformte Aussparungen im Flansch eines Gehäuses axial beweglich hindurchgreifen. Diese ringsegmentförmigen Druckabschnitte können beispielsweise etwa nierenförmig gebildet sein. Grundsätzlich können sich ein, zwei oder mehrere solcher ringsegmentförmigen Druckabschnitte, gegebenenfalls mit Abstand untereinander, über einen entsprechend großen Umfangsabschnitt erstrecken. Beispielsweise beträgt der Umfangsabschnitt bei zwei ringsegmentförmigen Druckabschnitten etwa 180°. Bei dieser Variante der Erfindung kann der Druckbolzen so ausgebildet sein, dass er mittig eine Bohrung aufweist für den Durchgang einer Innenhülse und/oder einer Welle beispielsweise eines Werkzeugs oder einer Maschine, so dass wiederum ähnliche Anwendungen, d. h., Ersatz von Tellerfederpaketen, wie bei der eingangs geschilderten Variante der Erfindung möglich sind.

Es war davon die Rede, dass die Kraft von dem axialbeweglichen Druckbolzen (oder den Druckbolzen) direkt oder indirekt auf die Druckmembran übertragen wird. Man kann beispielsweise zwischen dem Druckbolzen und der Druckmembran einen flächigen Ring anordnen, um eine gleichmäßige Kraftübertragung zwischen Druckbolzen und Druckmembran zu erzielen. Um einen oberen Anschlag bei der Hubbewegung des oder der Druckbolzen zu erreichen, weisen diese vorzugsweise am einen Ende ringförmige Flansche auf.

Eine bevorzugte Variante der Erfindung sieht vor, dass die Druckmembran im Längsschnitt betrachtet etwa eine U-Form aufweist. Dabei bildet vorzugsweise der U-Steg einen Boden der Druckmembran, welcher dem Druckbolzen zugewandt ist, d. h., dass der Boden der Druckmembran oben liegt, wenn der Druckbolzen oberhalb der Druckmembran angeordnet ist. Bei der eingangs genannten Variante der Erfindung mit mehreren auf einem Ring angeordneten Druckbolzen verwendet man eine Druckmembran mit einem mittigen Durchgang, wobei vorzugsweise ein innerer Ringsteg der Innenhülse zugewandt ist bzw. dem mittigen Durchgang und ein äußerer Ringsteg der Druckmembran der Wandung des Gehäuses zugewandt ist. Die Druckmembran hat also in diesem Fall eine Ringform mit einem etwa U-förmigen nach unten offenen Querschnitt.

Die Unterseite der Druckmembran und des Gehäuses verschließt man bei der erfindungsgemäßen Gasdruckfeder vorzugsweise über einen Deckel. Dieser Deckel kann mit der Druckmembran formschlüssig verbunden sein, beispielsweise über Wülste. Um eine Befüllung des Gasraums, d. h., des Druckraums innerhalb der Druckmembran zu ermöglichen, sieht man vorzugsweise eine Bohrung, insbesondere eine axiale Bohrung in dem Deckel vor. Diese Bohrung verschließt man vorzugsweise zur besseren Befüllung des Gasraums über ein Ventil. Die Verbindung zwischen Deckel und Gehäuse kann man beispielsweise über ein Verbindungs- und Sicherheitselement vornehmen, vorzugsweise über einen Sprengring oder dergleichen.

Eine erfindungsgemäße Gasdruckfeder kann mit hohen Gasdrücken arbeiten, die beispielsweise in der Größenordnung von bis zu etwa 300 bar bis 400 bar liegen können.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen,
- Fig. 1: eine Explosionsdarstellung einer erfindungsgemäßen Gasdruckfeder;
- Fig. 2: eine Darstellung einer erfindungsgemäßen Gasdruckfeder im zusammengebauten Zustand im Längsschnitt;
- Fig. 3: eine Draufsicht auf die Gasdruckfeder von Figur 2;
- Fig. 4: eine perspektivische Explosionsdarstellung einer Gasdruckfeder gemäß einer Variante der Erfindung;

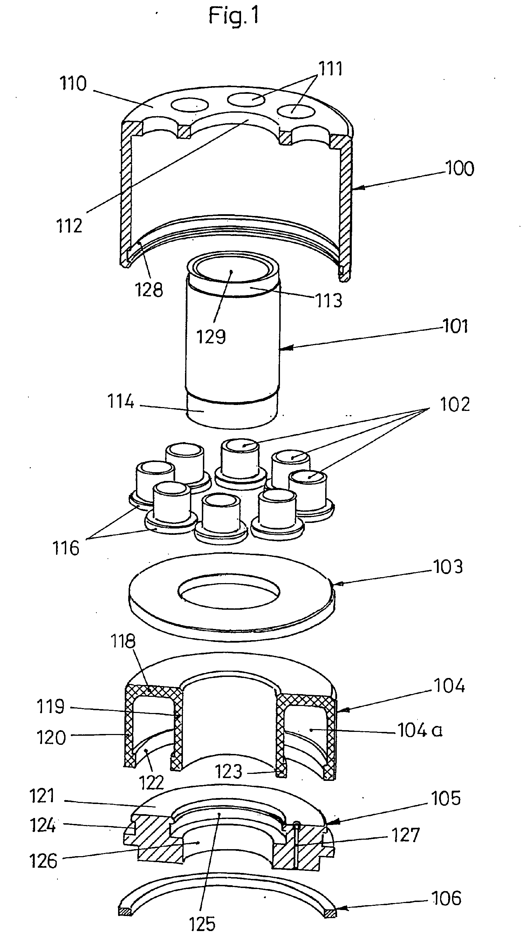

Zunächst wird auf Fig. 1 Bezug genommen. Die erfindungsgemäße Gasdruckfeder umfasst ein Gehäuse 100, eine konzentrisch in diesem Gehäuse mit Presssitz aufgenommene Innenhülse 101, eine Anzahl von axial beweglichen Druckbolzen 102, die so angeordnet sind, dass deren Mittelachsen auf einem Kreisring liegen, einen flächigen Ring 103, der z. B. aus Kunststoff oder Metall sein kann und der für eine flächige Kraftübertragung der Kräfte der Druckbolzen 102 und eine gleichmäßige Krafteinleitung in die obere Fläche der Druckmembran 104 sorgt. Darunter befindet sich die Druckmembran 104, die aus einem gummiähnlichen Werkstoff oder einem speziellen Kunststoff bestehen kann und eine elastische Verformung zulässt. Die Druckmembran 104 ist so geformt, dass sie auf der dem Ring 103 abgewandten Seite einen Gasraum 104a bildet, der ein inertes Gas, z. B. Stickstoff aufnimmt.

Unterseitig wird das Gehäuse 100 verschlossen durch den Deckel 105, der mittels des Sprengrings 106 im Gehäuse 100 befestigt wird.

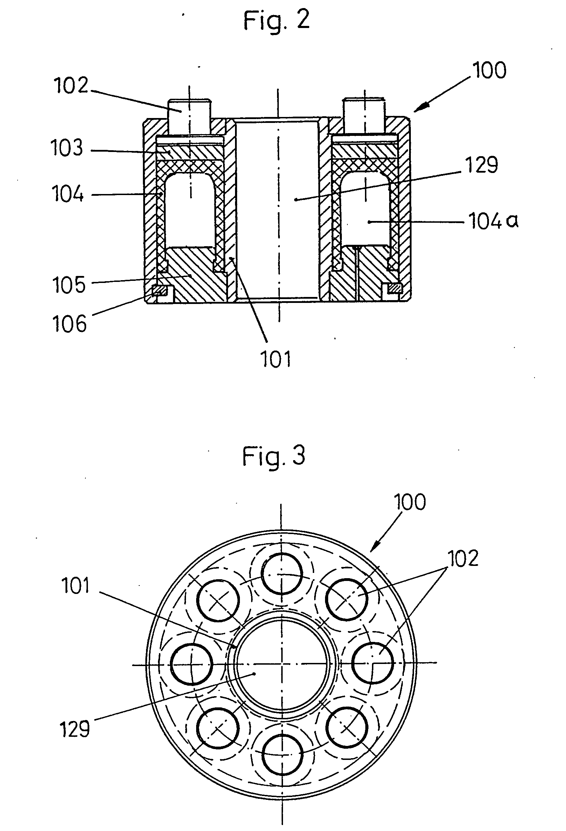

Nachfolgend wird weiterhin auf die Figuren 1 und 2 Bezug genommen und es werden weitere Einzelheiten der erfindungsgemäßen Gasdruckfeder beschrieben. Wie man in Figur 1 erkennt, ist das Gehäuse 100 im Prinzip topfförmig und weist einen zylindrischen hohlen Körper auf, der oberseitig durch einen radial nach innen ragenden Flansch 110 abschließt. In diesem Flansch 110 befinden sich die Bohrungen 111 für den Durchgang der Druckbolzen 102, die wie man sieht (siehe Figur 2) oberseitig gegenüber dem Flansch 110 vorstehen. Weiterhin weist der Flansch 110 eine mittige Bohrung 112 auf, die einen oberen Abschnitt 113 der Innenhülse 101 mit Presssitz aufnimmt. Wie man in Figur 1 gut erkennt, ist dieser obere Abschnitt 113 mit etwas geringerem Außendurchmesser ausgebildet als der übrige Außendurchmesser der Innenhülse 101, z. B. ist der obere Abschnitt 113 oben abgedreht. Dieser obere Abschnitt 113 wird so mit Presssitz in die mittige Bohrung 112 eingeschoben, dass die Innenhülse 101 wie man aus Figur 2 erkennt, etwa bündig oben mit dem Flansch 110 des Gehäuses abschließt.

Die Innenhülse 101 hat außerdem am anderen Ende ebenfalls einen ähnlichen Abschnitt 114 mit geringerem Außendurchmesser, der eine etwas größere axiale Länge aufweisen kann, als der Abschnitt 113. Dieser Abschnitt 114 wird wiederum mit Presssitz aufgenommen von einer mittigen Bohrung 126 des Deckels 105. Dadurch schließt die Innenhülse 101 unterseitig etwa bündig mit der Unterseite des Deckels 105 ab, wie man in Figur 2 gut erkennen kann.

Die Innenhülse 101 ist vorwiegend vorhanden, um die Montage und Fertigung der Gasdruckfeder zu vereinfachen. Grundsätzlich wäre es aber auch möglich, die Innenhülse 101 in einem Teil mit dem Gehäuse 100 zu fertigen.

Wie man aus den Figuren 1 und 2 weiterhin erkennt, weisen die Druckbolzen 102 am unteren Ende ringförmige Flansche 116 auf, die auf dem Ring 103 aufliegen und die Kraft über diesen Ring auf die Oberseite der Druckmembran 104 übertragen.

Die Form der Druckmembran 104 ist im Prinzip in der Draufsicht ringförmig, mit einem mittigen Durchgang für die Innenhülse (siehe Figur 2). Betrachtet man die ringförmige Druckmembran 104 im Längsschnitt, dann ergibt sich im Prinzip eine U-Form (siehe Figur 2), wobei der U-Steg den Boden 118 der Druckmembran bildet, auf den der Ring 103 drückt. Durch diesen Boden 118 ist die Druckmembran an der Oberseite geschlossen. Der Druckraum 104a wird weiterhin begrenzt durch die innere ringförmige Stegwand 119 und die äußere ringförmige Stegwand 120. An der Unterseite ist die Gasdruckmembran 104 offen, so dass der Gasraum 104a von dort z. B. durch eine Bohrung im Deckel 105 hindurch befüllt werden kann. Die offene Unterseite der Druckmembran 104 wird verschlossen durch die obere ringförmige Fläche 121 des Deckels 105, wie man in Figur 2 gut erkennen kann. Die Druckmembran 104 weist dazu im unteren Bereich eine Wulst 122 auf an dem äußeren Ringsteg 120 sowie eine ebensolche Wulst 123 an dem inneren Ringsteg 119. Über diese Wulste 122, 123 wird die Druckmembran jeweils in entsprechend geformten Hinterschnitten 124, 125 des Deckels 105 befestigt.

Der Deckel 105 weist weiterhin eine mittige Deckelbohrung 126 auf, die den Abschnitt 114 der Innenhülse 101 aufnimmt.

Zur Befüllung des Gasraumes 104a der Druckmembran 104 befindet sich beispielsweise eine axiale Bohrung 127 in dem Deckel 105, die über ein Füllventil verschließbar ist. Zur Befestigung der Anordnung, insbesondere des Deckels 105 in dem Gehäuse 100 dient der Sprengring 106, der in eine Nut 128 (siehe Figur 1) in der Innenwand des Gehäuses 100 eingesetzt wird.

Die Arbeitsweise der erfindungsgemäßen Gasdruckfeder ist wie folgt. Die Gasdruckfeder eignet sich beispielsweise dazu, die Werkzeugspannung eines Werkzeugs in einer Maschine zu liefern, in Anwendungsfällen in denen in der Regel bislang nach dem Stand der Technik Tellerfederpakete verwendet wurden. Die Gasdruckfeder gemäß der Variante nach Figur 1 ist vorgesehen für Anwendungen, bei denen eine mittige Welle durch den zylindrischen inneren Hohlraum 129 der Innenhülse 101 hindurchgeführt ist. Der Hub des Werkzeugs überträgt sich auf die oberen Flächen der Druckbolzen 102, die wie man in Figur 2 erkennt, nach oben aus dem Gehäuse 100 vorstehen. Diese bewegen sich beim Einfedern in axialer Richtung nach unten und übertragen die Kraft über die Flansche 116 und den Ring 103 auf den Boden 118 der Druckmembran 104, die sich entsprechend elastisch verformt, jedoch vorwiegend in ihrem oberen Bereich. Dieser Stauchung der Druckmembran 104 wirkt der Gasdruck des Gases im Gasraum 104a entgegen. Dieser Gasdruck kann je nach Befüllung des Gasraums relativ hoch sein und beispielsweise über 100 bar oder mehrere 100 bar betragen. Hub- und Federweg der Druckbolzen 102 sind relativ gering. Beim Rückhub der Druckbolzen dienen die Flansche 116 als oberer Anschlag. Die erfindungsgemäße Gasdruckfeder hat aber eine sehr hohe Kraftdichte und eine extrem hohe Dichtigkeit.

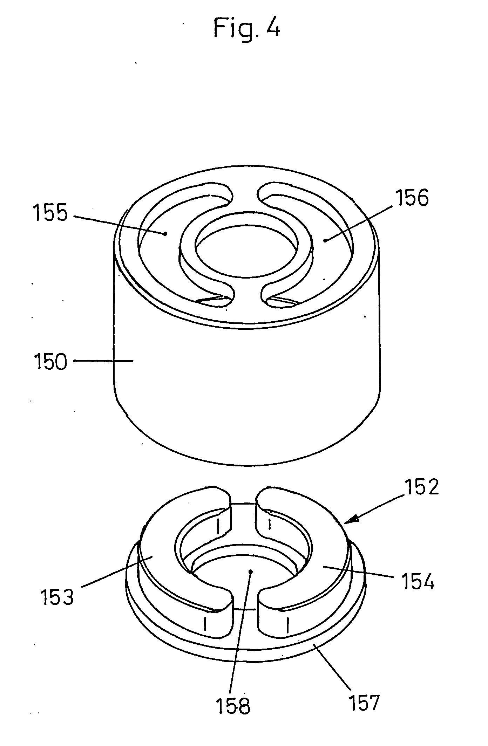

Ein weiteres alternatives Ausführungsbeispiel der Erfindung wird nachfolgend unter Bezugnahme auf Figur 4 näher erläutert. Wie man durch Vergleich mit Figur 1 erkennt, hat hier das Gehäuse 150 eine andere Form und anstelle mehrerer zylindrischer Druckbolzen ist hier nur ein Druckbolzen 152 vorhanden, der oberseitig zwei ringsegmentförmige Druckabschnitte 153, 154 aufweist, die durch entsprechend geformte ringsegmentförmige Aussparungen 155, 156 im oberen Flansch des Gehäuses 150 axial beweglich hindurchgreifen. Als oberer Anschlag für den Druckbolzen 152 dient hier der Flansch 157, der im Prinzip den Einzelflanschen 116 der Druckbolzen 102 funktionsmäßig entspricht. Durch die Ringsegmentform bzw. etwa Nierenform der Abschnitte 153, 154 des Druckbolzens 152 erhält man auch etwa eine gleichmäßige Verteilung der Krafteinleitung über den Umfang.

Der Druckbolzen 152 weist weiterhin mittig eine Bohrung 158 auf für den Durchgang einer Innenhülse ähnlich der Innenhülse 101 (in Figur 4 nicht dargestellt). Die übrigen Teile des zuvor anhand von Figur 1 beschriebenen Ausführungsbeispiels, nämlich der Ring 103, die Druckmembran 104 und der Deckel 105 sowie die Innenhülse 101 können bei dem Ausführungsbeispiel nach Figur 4 ähnlich ausgebildet sein wie bei dem anderen Ausführungsbeispiel nach Figur 1.

In beiden Ausführungsbeispielen gemäß Figur 1 bis 4 kann man auch mehrere der Gasdruckfedern axial hintereinander anordnen. Dadurch erreicht man einen größeren Hub und hat eine Sicherheit in dem Fall, dass eine Gasdruckfeder ausfällt.

## Patentansprüche

1. Gasdruckfeder mit wenigstens einem entgegen der Federkraft eines in einem Druckraum enthaltenen Druckgases in einem Gehäuse axial in einer Führung beweglichen Kolbenelement, auf dessen dem Druckraum abgewandtes Ende ein einen Hub ausführendes Bauteil einwirkt, wobei der Druckraum mindestens teilweise von einer elastisch verformbaren Druckmembran umschlossen ist und diese direkt oder indirekt von wenigstens einem axial beweglichen Druckbolzen als Kolbenelement beaufschlagt wird,
**dadurch gekennzeichnet, dass** mehrere Druckbolzen (102) vorgesehen sind, deren Mittelpunkte auf einem Kreisring angeordnet sind
und dass die Druckmembran (104) ringförmig ist mit einem mittigen Durchgang.

2. Gasdruckfeder nach Anspruch 1, **dadurch gekennzeichnet, dass** diese einen zentrischen zylindrischen Durchgang (129) aufweist, geeignet eine Welle oder dergleichen aufzunehmen, die die Gasdruckfeder durchsetzt.

3. Gasdruckfeder nach einem der Ansprüche 1 bis 2, **dadurch gekennzeichnet, dass** diese ein etwa topfförmiges Gehäuse (100) aufweist, mit einem oberen radial nach innen ragenden Flansch (110), der Bohrungen (111) für den Durchgang der Druckbolzen (102) aufweist.

4. Gasdruckfeder nach einem der Ansprüche 1 bis 3, **dadurch gekennzeichnet, dass** das Gehäuse (100) konzentrisch in einer mittigen Bohrung (112) eine überwiegend zylindrische Innenhülse (101) aufnimmt.

5. Gasdruckfeder nach einem der Ansprüche 1 bis 4, **dadurch gekennzeichnet, dass** ein flächiger Ring (103) vorgesehen ist, der zur gleichmäßigen Kraftübertragung zwischen Druckbolzen (102) und Druckmembran (104) angeordnet ist.

6. Gasdruckfeder nach einem der Ansprüche 1 bis 5, **dadurch gekennzeichnet, dass** die Druckbolzen (102) am einen Ende ringförmige Flansche aufweisen, die als Anschlag bei der Hubbewegung dienen.

7. Gasdruckfeder nach einem der Ansprüche 1 bis 6, **dadurch gekennzeichnet, dass** die Druckmembran (104) im Längsschnitt betrachtet etwa eine U-Form aufweist, wobei der U-Steg einen Boden (118) der Druckmembran bildet, der dem Druckbolzen (102) zugewandt ist.

8. Gasdruckfeder nach einem der Ansprüche 1 bis 7, **dadurch gekennzeichnet, dass** die Druckmembran einen inneren Ringsteg (119) aufweist, der der Innenhülse (101) zugewandt ist und einen äußeren Ringsteg (120), der der Wandung des Gehäuses (100) zugewandt ist.

9. Gasdruckfeder nach einem der Ansprüche 1 bis 8, **dadurch gekennzeichnet, dass** die Druckmembran (104) an der dem Boden (118) gegenüberliegenden Seite durch einen Deckel (105) verschlossen ist.

10. Gasdruckfeder nach einem der Ansprüche 1 bis 9, **dadurch gekennzeichnet, dass** der Deckel (105) mit der Druckmembran (104) formschlüssig, insbesondere über Wülste (122, 123) verbunden ist.

11. Gasdruckfeder nach einem der Ansprüche 1 bis 10, **dadurch gekennzeichnet, dass** eine axiale Bohrung (127) im Deckel (105) zur Befüllung des Gasraums (104a) vorgesehen ist, die vorzugsweise über ein Ventil verschließbar ist.

12. Gasdruckfeder nach einem der Ansprüche 1 bis 11, **dadurch gekennzeichnet, dass** der Deckel (105) und das Gehäuse (100) über mindestens ein Verbindungs- und Sicherheitselement, vorzugsweise über einen Sprengring (106) verbunden sind.

13. Gasdruckfeder mit wenigstens einem entgegen der Federkraft eines in einem Druckraum enthaltenen Druckgases in einem Gehäuse axial in einer Führung beweglichen Kolbenelement, auf dessen dem Druckraum abgewandtes Ende ein einen Hub ausführendes Bauteil einwirkt, wobei der Druckraum mindestens teilweise von einer elastisch verformbaren Druckmembran umschlossen ist und diese direkt oder indirekt von wenigstens einem axial beweglichen Druckbolzen als Kolbenelement beaufschlagt wird,
**dadurch gekennzeichnet, dass** diese einen Druckbolzen (152) mit ringsegmentförmigen Druckabschnitten (153, 154) aufweist, die durch entsprechend geformte Aussparungen (155, 156) im Flansch des Gehäuses (150) axial beweglich hindurchgreifen, wobei die Druckmembran (104) ringförmig ist mit einem mittigen Durchgang.

14. Gasdruckfeder nach Anspruch 13, **dadurch gekennzeichnet, dass** der Druckbolzen (152) einen Flansch (157) als Anschlag bei maximalem Hub aufweist.

15. Gasdruckfeder nach einem der Ansprüche 13 oder 14, **dadurch gekennzeichnet, dass** der Druckbolzen (152) mittig eine Bohrung (158) für den Durchgang einer Innenhülse und/oder der Welle eines Werkzeugs oder einer Maschine aufweist.
